# EUROPÄISCHE PATENTSCHRIFT

(11) **EP 3 574 232 B1**
(45) Veröffentlichungstag und Bekanntmachung des Hinweises auf die Patenterteilung: **03.02.2021**
(21) Anmeldenummer: 17832732.6
(22) Anmeldetag: 18.12.2017
(51) Int. Cl.: F16H 3/72

(54) **GETRIEBE, ANTRIEBSANORDNUNG MIT EINEM GETRIEBE UND VERFAHREN ZUM BETREIBEN DER ANTRIEBSANORDNUNG**
TRANSMISSION, DRIVE ASSEMBLY HAVING A TRANSMISSION, AND METHOD FOR OPERATING THE DRIVE ASSEMBLY
TRANSMISSION, SYSTÈME D'ENTRAÎNEMENT COMPRENANT UNE TRANSMISSION ET PROCÉDÉ PERMETTANT DE FAIRE FONCTIONNER LE SYSTÈME D'ENTRAÎNEMENT

(30) Priorität: 27.01.2017 DE 102017101650
(43) Veröffentlichungstag der Anmeldung: 04.12.2019
(73) Patentinhaber: Renk Aktiengesellschaft, 86159 Augsburg (DE)
(72) Erfinder: BOIGER, Peter, 86199 Augsburg (DE); PINNEKAMP, Burkhard, 86199 Augburg (DE)
(74) Vertreter: Schlosser, Stefan
(86) Internationale Anmeldenummer: PCT/DE2017/101082
(87) Internationale Veröffentlichungsnummer: WO 2018/137730

(56) Entgegenhaltungen:
- EP-A2- 1 484 532
- WO-A1-2014/183139
- WO-A1-2016/172742
- DE-A1-102015 006 084
- DE-C- 973 392

## Beschreibung

Die Erfindung betrifft ein Getriebe für eine Antriebsanordnung einer Arbeitsmaschine zum Antreiben der Arbeitsmaschine mit variabel einstellbarer Drehzahl. Des Weiteren betrifft die Erfindung eine Antriebsanordnung mit einem Getriebe und einer mit variabel einstellbarer Drehzahl anzutreibenden Arbeitsmaschine sowie ein Verfahren zum Betreiben der Antriebsanordnung.

Aus der Praxis sind Anwendungen bekannt, in welchen eine Arbeitsmaschine, wie zum Beispiel ein Verdichter oder eine Pumpe, mit einer variabel einstellbaren Drehzahl betrieben werden müssen. Hierfür werden nach der Praxis, wenn die Arbeitsmaschine nicht eine drehzahlvariable Turbine oder ein Verbrennungsmotor ist, entweder als Antriebsaggregate Elektromotoren mit Frequenzumrichter eingesetzt, oder es kommt ein Getriebe mit einem mechanischen Überlagerungszweig zum Einsatz, mit welchem eine, im benötigten Bereich variable Übersetzung bereitgestellt werden kann. Beide aus der Praxis bekannten Möglichkeiten zum Antreiben einer Arbeitsmaschine mit variabel einstellbarer Drehzahl sind aufwendig und teuer.

Aus der DE 10 2015 006 084 A1 ist ein Getriebe für eine Antriebsanordnung einer Arbeitsmaschine zum Antreiben der Arbeitsmaschine mit variabel einstellbarer Drehzahl nach dem Oberbegriff des Anspruchs 1 bekannt.

Hiervon ausgehend liegt der vorliegenden Erfindung die Aufgabe zugrunde, ein neuartiges Getriebe, eine Antriebsanordnung mit einem solchen Getriebe und ein Verfahren zum Betreiben einer solchen Antriebsanordnung schaffen, mit Hilfe derer Verlustleistung reduziert und die Effizienz gesteigert werden kann.

Diese Aufgabe wird durch ein Getriebe nach Anspruch 1 gelöst. Dadurch dass das als Überlagerungsmotor ausgebildete zweite Antriebsaggregat gebremst bzw. arretiert werden kann, muss der Überlagerungsmotor dann nicht mehr mit Energie versorgt werden, wodurch, Verlustleistung reduziert und die Effizienz gesteigert werden kann. Ferner kann die Betriebsflexibilität gesteigert werden.

Dadurch dass über die Bremse oder Arretierung oder Kupplung das Moment am Planetenträger direkt gegen das Getriebegehäuse abstützbar ist und dass der Planetenträger über die Bremse oder Arretierung oder Kupplung momentfest mit dem Gehäuse verbindbar ist, kann Verlustleistung besonders vorteilhaft reduziert und die Effizienz besonders vorteilhaft gesteigert werden kann. Ferner kann hierdurch die Betriebsflexibilität besonders vorteilhaft gesteigert werden.

Dadurch dass die Bremse oder Arretierung oder Kupplung auf derjenigen Welle des Getriebes angeordnet ist, in welche das zweite Antriebsaggregat eintreibt, ist diese Bauform des Getriebes zur Reduzierung von Verlustleistung und Steigerung der Effizienz und Betriebsflexibilität besonders vorteilhaft.

Die erfindungsgemäße Antriebsanordnung ist in Anspruch 4 definiert. Das Verfahren zum Betreiben der Antriebsanordnung nach Anspruch 4 ist in Anspruch 5 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1:: ein Blockschaltbild eines Getriebes bzw. einer entsprechenden Antriebsanordnung, das bzw. die nicht unter den Wortlaut des Anspruchs 1 fällt;
- Fig. 2:: ein Blockschaltbild eines erfindungsgemäßen Getriebes bzw. einer entsprechenden Antriebsanordnung;
- Fig. 3:: ein Blockschaltbild eines erfindungsgemäßen Getriebes bzw. einer entsprechenden Antriebsanordnung; und
- Fig. 4:: ein Blockschaltbild eines weiteren Getriebes bzw. einer entsprechenden. Antriebsanordnung, das bzw. die nicht unter den Wortlaut des Anspruchs 1 fällt;

Die Erfindung betrifft ein Getriebe für eine Antriebsanordnung einer Arbeitsmaschine zum Antreiben der Arbeitsmaschine mit variabel einstellbarer Drehzahl. Des Weiteren betrifft die Erfindung eine Antriebsanordnung einer mit variabel einstellbarer Drehzahl anzutreibenden Arbeitsmaschine und ein Verfahren zum Betreiben einer solchen Antriebsanordnung.

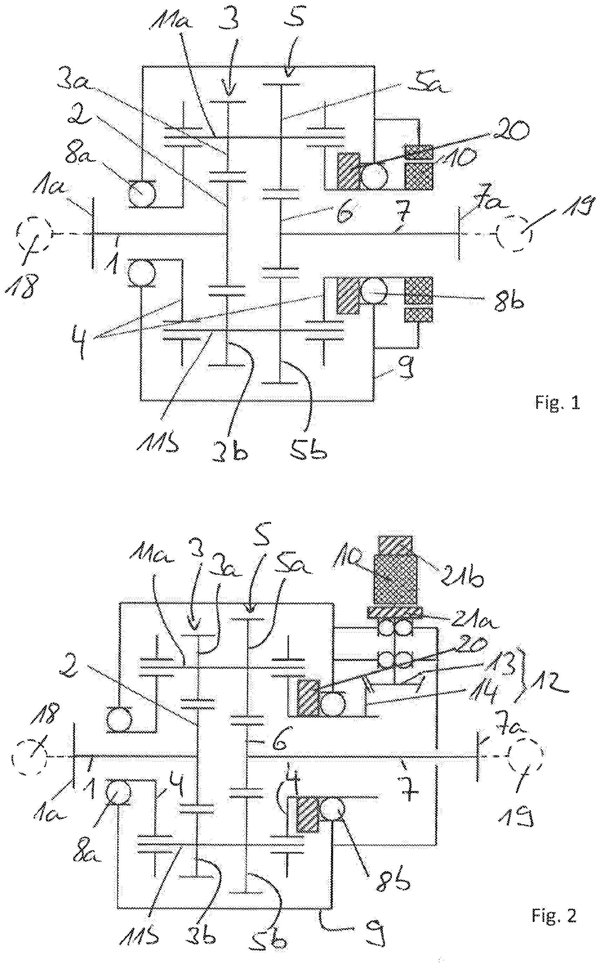

Fig. 1 zeigt ein Ausführungsbeispiel eines Getriebes bzw. einer Antriebsanordnung für eine Arbeitsmaschine zum Antreiben der Arbeitsmaschine mit variabel einstellbarer Drehzahl.

Das Getriebe der Fig. 1 verfügt über einen ersten Planetenradsatz 3, wobei an den ersten Planetenradsatz 3 eine Welle 1 des Getriebes direkt gekoppelt ist. An die Welle 1, die an den ersten Planetenradsatz 3 gekoppelt ist, ist ein erstes Antriebsaggregat 18 direkt koppelbar, insbesondere über einen Wellenflansch 1a dieser Welle 1.

Beim ersten Antriebsaggregat 18 handelt es sich um einen sogenannten Hauptantrieb. Der Hauptantrieb kann vorzugsweise mit konstanter Drehzahl betreiben werden.

Ferner verfügt das Getriebe 1 der Fig. 1 über einen zweiten Planetenradsatz 5. Der zweite Planetenradsatz 5 ist direkt an eine weitere Welle 7 des Getriebes 1 gekoppelt, wobei an diese Welle 7, insbesondere an einen Wellenflansch 7a der Welle 7, die mit variabel einstellbarer Drehzahl anzutreibende Arbeitsmaschine 19 direkt koppelbar ist.

Der erste Planetenradsatz 3 und der zweite Planetenradsatz 5 verfügen jeweils über Planetenräder 3a, 3b bzw. 5a, 5b, die auf mindestens zwei gemeinsamen Planetenwellen 11a, 11b angeordnet sind. So sind in Fig. 1 zwei Planetenwellen 11a, 11b gezeigt, wobei auf der Planetenwelle 11a die Planetenräder 3a und 5a der Planetenradsätze 3, 5 und auf der Planetenwelle 11b die Planetenräder 3b, 5b der Planetenradsätze 3, 5 angeordnet sind. Es sei darauf hingewiesen, dass auch mehr als zwei derartige Planetenwellen 11a, 11b mit an denselben angeordneten Planetenrädem vorhanden sein können, so zum Beispiel drei oder vier Planetenwellen mit entsprechenden Planetenrädern.

Die Planetenwellen 11a, 11b sind in einem Planetenträger 4 drehbar gelagert. Der Planetenträger 4 ist nicht gehäusefest angebunden, vielmehr ist der Planetenträger 4 in einem Getriebegehäuse 9 drehbar gelagert, wobei Fig. 1 Wälzlager 8a, 8b zeigt, über die der Planetenträger 4 im Planetengehäuse 9 drehbar gelagert ist. Der Planetenträger 4 ist über ein zweites Antriebsaggregat 10 antreibbar.

Beim zweiten Antriebsaggregat 10 handelt es sich um einen sogenannten Überlagerungsantrieb.

Im Ausführungsbeispiel der Fig. 1 ist das erste Antriebsaggregat 18, welches über den Wellenflansch 1a direkt an der Welle 1 des Getriebes angreift, über die Welle 1 direkt an ein Sonnenrad 2 des ersten Planetenradsatzes 3 koppelbar, wobei dieses erste Antriebsaggregat 18 über das Sonnenrad 2 in die auf den Planetenwellen 11a, 11b angeordneten Planetenräder 3a, 3b des ersten Planetenradsatzes 3 eintreibt.

Hierdurch werden die Planetenwellen 11a, 11b und damit auch die Planetenräder 5a, 5b des zweiten Planetenradsatzes 5 angetrieben, wobei der zweite Planetenradsatz 5 ein Sonnenrad 6 aufweist, welches über die Planetenräder 5a, 5b des zweiten Planetenradsatzes 5 angetrieben wird. Dieses Sonnenrad 6 des zweiten Planetenradsatzes 5 ist mit der Welle 7 und über die Welle 7 mit der Arbeitsmaschine 19 gekoppelt, die mit variabel einstellbarer Drehzahl anzutreiben ist.

In Fig. 1 kämmen die Planetenräder 3a, 3b des ersten Planetenradsatzes 3 in das Sonnenrad 2 des ersten Planetenradsatzes 3, wohingegen die Planetenräder 5a, 5b des zweiten Planetenradsatzes 5 in das Sonnenrad 6 des zweiten Planetenradsatzes 5 kämmen. Bei einer Antriebsanordnung, bei welcher das in Fig. 1 gezeigte Getriebe zum Einsatz kommt, greift demnach das erste Antriebsaggregat 18 an der Welle 1 an, das zweite Antriebsaggregat 10 greift am Planetenträger 4 an, die mit variabel einstellbarer Drehzahl anzutreibende Arbeitsmaschine 19 greift an der Welle 7 an.

Beim ersten Antriebsaggregat 18, dem sogenannten Hauptantrieb, welches an der Welle 1 angreift, handelt es sich vorzugsweise um ein mit konstanter Drehzahl anzutreibendes Antriebsaggregat.

Beim zweiten Antriebsaggregat 10, dem sogenannten Überlagerungsantrieb, welches am Planetenträger 4 angreift, handelt es sich vorzugsweise um ein mit variabler Drehzahl anzutreibendes Antriebsaggregat.

Ein Teil der Leistung zum Antreiben der Arbeitsmaschine 19 wird demnach von dem am Flansch 1a und damit an der Welle 1 angreifenden, ersten Antriebsaggregat 18 bereitgestellt, welches vorzugsweise mit konstanter Drehzahl betrieben wird. Je nach Drehzahl der Arbeitsmaschinen 19 wird der Rest vom Antriebsaggregat 10 bereitgestellt. Dabei sind beide Drehrichtungen vorgesehen und die Teilleistung kann positiv, also motorisch wirkend, und negativ, also generatorisch wirkend, sein.

Dieses erste Antriebsaggregat 18 treibt in Fig. 1 über das Sonnenrad 2 des ersten Planetenradsatzes 3 in die Planetenräder 3a, 3b ein, und damit in die Planetenwellen 11a, 11b, mit welchen die Planetenräder 3a, 3b drehfest verbunden sind. Ebenfalls sind die Planetenräder 5a, 5b des zweiten Planetenradsatzes 5 mit den Planetenwellen 11a, 11b drehfest verbunden, die ihrerseits in das Sonnenrad 6 des zweiten Planetenradsatzes 5 eintreiben, um letztendlich den vom ersten Antriebsaggregat 18 bereitgestellten Teil der Antriebsleistung der mit variabler Drehzahl anzutreibenden Arbeitsmaschine 19 bereitzustellen.

Wie bereits ausgeführt, sind die Planetenwellen 11a, 11b im Planetenträger 4 gelagert. Der Planetenträger 4 ist dabei im Getriebegehäuse 9 über Wälzlager 8a, 8b drehbar gelagert und somit antreibbar.

Der Antrieb des Planetenträgers 4 erfolgt über das zweite Antriebsaggregat 10, dessen Drehzahl bzw. Antriebsleistung der Drehzahl bzw. Antriebsleistung des an der Welle 1 angreifenden ersten Antriebsaggregats 18 überlagert wird. Wie bereits ausgeführt, wird das erste Antriebsaggregat 18, welches an der Welle 1 angreift, vorzugsweise mit fester bzw. konstanter Drehzahl angetrieben, wohingegen das zweite Antriebsaggregat 10, welches am Planetenträger 4 angreift, vorzugsweise mit variabler Drehzahl angetrieben wird.

Bei beiden Antriebsaggregaten 18, 10 handelt es sich vorzugsweise um Elektromotoren.

Im Ausführungsbeispiel der Fig. 1 ist das zweite Antriebsaggregat 10 als Hohlwellenmotor ausgeführt, der direkt an den Planetenträger 4 angebaut ist.

Zwischen das zweite Antriebsaggregat 10 und den Planetenträger 4 kann auch eine Übersetzungsstufe geschaltet sein.

Ein Teil der Antriebsleistung wird von dem vorzugsweise mit konstanter Drehzahl betriebenen, als Elektromotor ausgebildeten ersten Antriebsaggregat 18 in die Anordnung am Flansch 1a eingebracht. Über das antriebsseitige Sonnenrad 2 werden wenigstens zwei, vorteilhaft drei oder vier Planetenwellen über deren Ritzel angetrieben. Die Planetenwellen 11a, 11b sind im Planetenträger 4 gelagert. Die Planetenräder 5a, 5b führen die Leistung auf das gemeinsame abtriebsseitige Sonnenrad 6 zusammen, welches die als Verdichter oder Pumpe ausgebildete Arbeitsmaschine 19 antreibt. Der Planetenträger 4 ist nicht ortsfest, sondern im Getriebegehäuse 9 mit den Lagern 8a, 8b gelagert und damit drehbar. Durch Antrieb dieses Planetenträgers 4 mit als Elektromotor ausgebildeten zweiten Antriebsaggregat 10, weiches mit vorzugsweise variabler Drehzahl betreiben werden kann, wird der ersten Antriebsdrehzahl des ersten Antriebsaggregats 18 eine weitere Drehzahl überlagert und damit eine einstellbare Abtriebsdrehzahl erreicht. In Fig. 1 ist das zweite Antriebsaggregat 10 als Hohlwellenmotor direkt an den Planetenträger 4 angebaut. Der Antrieb kann auch über eine Getriebestufe erfolgen.

Es ist eine Bremse 20 oder eine Arretierung oder eine Kupplung vorgesehen, über die Moment am Planetenträger 4 gegen das Getriebegehäuse 9 abstützbar ist. Über die Bremse 20 oder die Arretierung oder die Kupplung ist Moment am Planetenträger 4 direkt gegen das Getriebegehäuse 9 abstützbar. Die Bremse 20 oder die Arretierung oder die Kupplung ist demnach zwischen den Planetenträger 4 und das Getriebegehäuse 9 geschaltet. Der Planetenträger 4 ist über die Bremse 20 oder die Arretierung oder die Kupplung momentfest mit dem Gehäuse 9 verbindbar. Die Bremse 20 oder die Arretierung oder die Kupplung ist dem zweiten Antriebsaggregat 10 zugordnet und wirkt mit demselben zusammen.

Dann, wenn ein Antrieb der Antriebsanordnung ausschließlich über das erste Antriebsaggregat 18 erfolgen soll, wird über die Bremse 20 oder die Arretierung oder die Kupplung ein Moment am Planetenträger 4 gegen das Getriebegehäuse 9 abgestützt. Hierbei wird dann das zweite Antriebsaggregat 10 vorzugsweise momentfrei geschaltet. Das zweite Antriebsaggregat 10 wird hierbei vorzugsweise abgeschaltet und damit stromfrei geschaltet.

Mithilfe der Bremse 20 oder Arretierung oder Kupplung kann der Planetenträger 4 demnach momentfest mit dem Gehäuse 9 verbunden werden. Das zweite Antriebsaggregat 10 kann hierbei stromfrei geschaltet werden. Der Antrieb erfolgt dann ausschließlich über das erste Antriebsaggregat 10 mit durch das Getriebe vorgegebener fester Übersetzung auf den Abtrieb und damit auf die Arbeitsmaschine 19.

Die Bremse 20 oder die Arretierung oder die Kupplung ist in Fig. 1 vorzugsweise auf derjenigen Welle des Getriebes angeordnet ist, die mit dem zweiten Antriebsaggregat 10 verbunden ist, in Fig. 1 auf dem im Gehäuse 9 drehbar gelagerten Platenträger 4. Damit ist ein besonders effizienter Betrieb unter Verringerung von Verlustleistung möglich, bei dem das zweite Antriebsaggregat 10 abgeschaltet werden kann, sobald die Bremse 20 oder die Arretierung oder die Kupplung aktiv ist.

Über Bremse 20 oder die Arretierung oder die Kupplung ist außerdem ein Sicherheitsgewinn bei Ausfall des zweiten Antriebsaggregats 10 gegeben.

Als Kupplung kann eine mechanische Kupplung, z.B. Klauenkupplung oder eine mechansiche Arretierung, z.B. durch Haltebolzen, eingesetzt werden, wodurch der bauliche Aufwand verringert werden kann. Eine solche Kupplung kann jedoch im Gegensatz zu einer Bremse nur im Stillstand der Antriebsanordnung geschaltet werden.

Das zweiten Antriebsaggregat 10 wird vorzugsweise in zwei Drehrichtungen betreiben. Wenn, das zweite Antriebsaggregat 10 nur in einer Drehrichtung betrieben wird, kann als Bremse eine Rücklaufsperre oder dergleichen eingesetzt werden, sodass bei Abschalten des zweiten Antriebsaggregats 10 automatisch das Drehmoment über die Rücklaufsperre abgestützt wird.

Fig. 2 zeigt eine Abwandlung des Getriebes bzw. der Antriebsanordnung der Fig. 1, in welcher das zweite Antriebsaggregat 10 über eine Kegelradstufe 12 an den Planetenträger 4 des Getriebes 1 gekoppelt ist, wobei die Kegelradstufe 12 ein Kegelrad 14 und eine Kegelritzelwelle 13 umfasst. In Fig. 2 ist zusätzlich zu der Bremse 20 oder der Arretierung oder der Kupplung, die zwischen den Platenträger 4 und das Gehäuse 9 geschaltet ist, mindestens eine weitere Bremse 21a, 21b oder Arretierung oder Kupplung vorgesehen, die der Antriebswelle des zweiten Antriebsaggregats 10 bzw. derjenigen Welle des Getriebes zugeordnet ist, in welche das zweite Antriebsaggregats 10 eintreibt. Hiermit kann insbesondere durch Bereitstellung von Redundanz die Betriebssicherheit gesteigert werden.

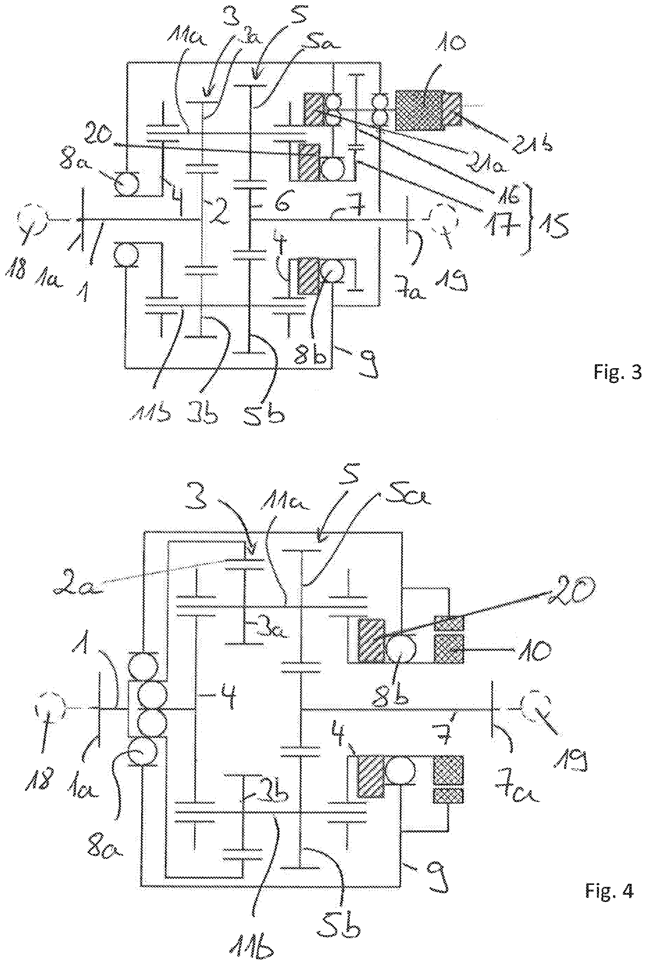

Fig. 3 zeigt eine weitere Abwandlung des Getriebes bzw. der Antriebsanordnung, in welcher das zweite Antriebsaggregat 10 über eine Stimradstufe 15 mit Stirnrad 17 und Ritzelwelle 16 an den Planetenträger 4 des Getriebes gekoppelt ist, um denselben anzutreiben. Auch in Fig. 3 ist zusätzlich zu der Bremse 20 oder der Arretierung oder der Kupplung, die zwischen den Platenträger 4 und das Gehäuse 9 geschaltet ist, mindestens eine weitere Bremse 21a, 21b oder Arretierung oder Kupplung vorgesehen, die der Antriebswelle des zweiten Antriebsaggregats 10 bzw. derjenigen Welle des Getriebes zugeordnet ist, in welche das zweite Antriebsaggregats 10 eintreibt. Hiermit kann wiederum insbesondere durch Bereitstellung von Redundanz die Betriebssicherheit gesteigert werden.

Wie bereits ausgeführt, ist die Drehzahl des Planetenträgers 4 über das zweite Antriebsaggregat 10 variabel einstellbar, wodurch eine in einem Bereich variabel einstellbarer Abtriebsdrehzahl an der Welle 7 zum Antrieb der Arbeitsmaschine 19 erreicht wird, nämlich durch Überlagerung der Drehzahl bzw. Antriebsleistung des zweiten Antriebsaggregats 10 mit bzw. zur Drehzahl bzw. Antriebsleistung der an der Welle 1 vom ersten Antriebsaggregat 18 bereitgestellten Drehzahl bzw. Antriebsleistung.

Ein weiteres Getriebe zeigt Fig. 4, wobei sich das Ausführungsbeispiel der Fig. 4 vom Ausführungsbeispiel der Fig. 1 dadurch unterscheidet, dass die an der Welle 1 von dem ersten Antriebsaggregat 18 bereitgestellte Antriebsleistung nicht über ein Sonnenrad, sondern vielmehr über ein Hohlrad 2a des ersten Planetenradsatzes 3 die Planetenräder 3a, 3b des ersten Planetenradsatzes 3 antreibt. Hinsichtlich aller übrigen Details stimmt das Ausführungsbeispiel der Fig. 4 mit dem Ausführungsbeispiel der Fig. 1 überein. Obwohl nicht gezeigt, kann beim Ausführungsbeispiel der Fig. 4 zwischen das zweite Antriebsaggregat 10 und den Planetenträger 4 in Übereinstimmung zu den Ausführungsbeispielen der Fig. 2 und 3 auch eine Übersetzungsstufe in Form einer Kegelradstufe 12 oder Stimradstufe 15 geschaltet sein. In dieser Ausführung werden höhere Übersetzungen der Drehzahlen der Wellen 1 und 7 im Vergleich zu den vorherigen Ausführungsbeispielen ermöglicht.

Die Getriebe sind als Überlagerungsgetriebe ausgeführt. Bei den gezeigten Getrieben handelt es sich jeweils um Differenzialgetriebe mit zwei Planetenradsätzen 3, 5, wobei das Getriebe zwischen zwei Antriebsaggregate 18, 10 und eine Arbeitsmaschine 19 geschaltet ist, um die Arbeitsmaschine 19 mit variabel einstellbarer Drehzahl anzutreiben. Eines der Antriebsaggregate wird mit konstanter Drehzahl und das andere Antriebsaggregat vorzugsweise mit variabler Drehzahl angetrieben. Obwohl nicht bevorzugt, ist es auch möglich, beide Antriebsaggregate mit variabel einstellbarer Drehzahl auszuführen. In den gezeigten Ausführungsbeispielen treibt das erste Antriebsaggregat 18 entweder über ein Sonnenrad 2 oder ein Hohlrad 2a in die Planetenräder 3a, 3b der ersten Planetenradstufe 3 ein. Das zweite Antriebsaggregat 10 treibt jeweils in den im Gehäuse 9 drehbar gelagerten Planetenträger 4 ein. Der Abtrieb erfolgt über den zweiten Planetenradsatz 5 des Getriebes zur Arbeitsmaschine 19 hin. Über eine Bremse 20 oder Arretierung oder Kupplung ist ein Moment am Planetenträger 4 gegen das Getriebegehäuse 9 abstützbar.

### Bezugszeichenliste

- 1: Welle
- 1a: Wellenflansch
- 2: Sonnenrad
- 2a: Hohlrad
- 3: Planetenradsatz
- 3a: Planetenrad
- 3b: Planetenrad
- 4: Planetenträger
- 5: Planetenradsatz
- 5a: Planetenrad
- 5b: Planetenrad
- 6: Sonnenrad
- 7: Welle
- 7a: Wellenflansch
- 8a: Lager
- 8b: Lager
- 9: Getriebegehäuse
- 10: Antriebsaggregat
- 11a: Planetenwelle
- 11b: Planetenwelle
- 12: Kegelradstufe
- 13: Kegelritzelwelle
- 14: Kegelrad
- 15: Stirnradstufe
- 16: Ritzelwelle
- 17: Stirnrad
- 18: Antriebsaggregat
- 19: Arbeitsmaschine
- 20: Bremse
- 21 a: Bremse
- 21b: Bremse

## Patentansprüche

1. Getriebe für eine Antriebsanordnung einer Arbeitsmaschine zum Antreiben der Arbeitsmaschine mit variabel einstellbarer Drehzahl,
mit einem ersten Planetenradsatz (3), an den ein erstes Antriebsaggregat (18) koppelbar ist,
mit einem zweiten Planetenradsatz (5), an den die Arbeitsmaschine (19) koppelbar ist,
wobei der erste Planetenradsatz (3) und der zweite Planetenradsatz (5) jeweils Planetenräder (3a, 3b, 5a, 5b) aufweisen, die auf mindestens zwei gemeinsamen Planetenwellen (11a, 11b), die in einem Planetenträger (4) gelagert sind, angeordnet sind,
wobei der Planetenträger (4) in einem Getriebegehäuse (9) drehbar gelagert und von einem zweiten Antriebsaggregat (10), welches über eine Kegelradstufe (12) oder über eine Stirnradstufe (15) an den Planetenträger (4) angebaut ist, antreibbar ist,
**gekennzeichnet durch**
mindestens eine erste Bremse (20) oder Arretierung oder Kupplung, über die ein Moment am Planetenträger (4) direkt gegen das Getriebegehäuse (9) abstützbar ist, wobei die mindestens eine erste Bremse (20) oder Arretierung oder Kupplung zwischen den Planetenträger (4) und das Getriebegehäuse (9) geschaltet ist,
mindestens eine zweite Bremse (21a, 21b) oder Arretierung oder Kupplung, die der Antriebswelle des zweiten Antriebsaggregats (10) und/oder derjenigen Welle des Getriebes zugeordnet ist, in welche das zweite Antriebsaggregats (10) eintreibt, wobei über die mindestens eine zweite Bremse (21a, 21b) oder Arretierung oder Kupplung Moment abstützbar ist.

2. Getriebe nach Anspruch 1, **dadurch gekennzeichnet, dass** der Planetenträger (4) über die mindestens eine erste Bremse (20) oder Arretierung oder Kupplung momentfest mit dem Gehäuse (9) verbindbar ist.

3. Getriebe nach Anspruch 1 oder 2, **dadurch gekennzeichnet, dass** die mindestens eine erste Bremse (20) als automatische schaltende Rücklaufsperre oder Synchronkupplung ausgeführt ist.

4. Antriebsanordnung einer mit variabel einstellbarer Drehzahl anzutreibenden Arbeitsmaschine
mit einem Getriebe nach einem der Ansprüche 1 bis 3,
mit einem an den ersten Planetenradsatz (3) des Getriebes gekoppelten ersten Antriebsaggregat (18),
mit einer an den zweiten Planetenradsatz (5) des Getriebes gekoppelten Arbeitsmaschine (19),
mit einem an den Planetenträger (4) des Getriebes gekoppelten zweiten Antriebsaggregat (10),
wobei das erste Antriebsaggregat (18) und/oder das zweite Antriebsaggregat (10) mit variabel einstellbarer Drehzahl antreibbar sind.

5. Verfahren zum Betreiben einer Antriebsanordnung nach Anspruch 4, **dadurch gekennzeichnet, dass** dann, wenn ein Antrieb der Antriebsanordnung ausschließlich über das erste Antriebsaggregat (18) erfolgt, über die mindestens eine erste Bremse (20) oder Arretierung oder Kupplung ein Moment am Planetenträger (4) gegen das Getriebegehäuse (9) abgestützt wird.

6. Verfahren nach Anspruch 5, **dadurch gekennzeichnet, dass** dann, wenn über die mindestens eine erste Bremse (20) oder Arretierung oder Kupplung ein Moment am Planetenträger (4) gegen das Getriebegehäuse (9) abgestützt wird, das zweite Antriebsaggregat (10) momentfrei geschaltet wird.

## Claims

1. A transmission for a drive arrangement of a working machine for driving the working machine with variably adjustable rotational speed,
having a first planet gear set (3), to which a first drive unit (18) can be coupled,
having a second planet gear set (5), to which the working machine (19) can be coupled,
wherein the first planetary gear set (3) and the second planetary gear set (5) each comprise planet gears (3a, 3b, 5a, 5b) which are arranged on at least two common planet shafts (11a, 11b), which are mounted in a planet carrier (4),
wherein the planet carrier (4) is rotatably mounted in a transmission housing (9) and is driveable by a second drive unit (10), which is attached to the planet carrier (4) via a bevel gear stage (12) or via a spur gear stage (15),
**characterized by**
at least one first brake (20) or lock or clutch via which a torque on the planet carrier (4) can be directly supported against the transmission housing (9), wherein the at least one first brake (20) or lock or coupling is connected between the planet carrier (4) and the transmission housing (9),
at least one second brake (21a, 21b) or lock or coupling, which is assigned to the driveshaft of the second drive unit (10) and/or that shaft of the transmission into which the second drive unit (10) drives, wherein via the at least one second brake (21a, 21b) or lock or coupling, torque can be braced.

2. The transmission according to Claim 1, **characterized in that** the planet carrier (4) can be connected to the housing (9) in a torque-fixed manner via the at least one first break (20) or lock or coupling.

3. The transmission according to Claim 1 or 2, **characterized in that** the at least one first brake (20) is embodied as automatically switching reversing lock or synchronous coupling.

4. A drive arrangement having a working machine to be driven with variably adjustable rotational speed, having a transmission according to any one of the Claims 1 to 3,
having a first drive unit (18) that is coupled to the first planetary gear set (3) of the transmission,
having a working machine (19) that is coupled to the second planetary gear set (5) of the transmission,
having a second drive unit (10) that is coupled to the planet carrier (4) of the transmission, wherein the first drive unit (18) and/or the second drive unit (10) can be driven with variably adjustable rotational speed.

5. A method for operating a drive arrangement according to Claim 4, **characterized in that** in particular when a drive of the drive arrangement is exclusively effected via the first drive unit (18), a torque on the planet carrier (4) is braced against the transmission housing (9) via the at least one first brake (20) or lock or coupling.

6. The method according to Claim 5, **characterized in that** in particular when a torque on the planet carrier (4) is braced against the transmission housing (9) via the at least one first brake (20) or lock or coupling, the second drive unit (10) is switched free of torque.

## Revendications

1. Transmission pour un dispositif d'entraînement d'une machine de travail pour entraîner la machine de travail à vitesse réglable de manière variable, comportant un premier train planétaire (3), auquel une première unité d'entraînement (18) peut être couplée, comportant un deuxième train planétaire (5), auquel la machine de travail (19) peut être couplée,
dans laquelle le premier train planétaire (3) et le deuxième train planétaire (5) ont chacun des engrenages planétaires (3a, 3b, 5a, 5b) qui sont disposés sur au moins deux arbres planétaires communs (11a, 11b), qui sont positionnés dans un porte-satellites (4),
dans laquelle le porte-satellites (4) est positionné en rotation dans un carter d'engrenage (9) et peut être entraîné par une deuxième unité d'entraînement (10), qui est montée via un étage d'engrenage conique (12) ou un étage d'engrenage droit (15) au porte-satellites (4),
**caractérisé par**
au moins un premier frein (20) ou dispositif de verrouillage ou embrayage, par l'intermédiaire duquel un couple sur le porte-satellites (4) peut être supporté directement contre le carter d'engrenage (9), dans lequel au moins un premier frein (20) ou dispositif de verrouillage ou embrayage est commuté entre le porte-satellites (4) et la boîte de vitesses (9),
au moins un deuxième frein (21a, 21b) ou dispositif de verrouillage ou embrayage, qui est affecté à l'arbre d'entraînement de la deuxième unité d'entraînement (10) et/ou à cet arbre de la transmission, dans lequel la deuxième unité d'entraînement (10) entraîne, dans lequel via moins un deuxième frein (21a, 21b) ou dispositif de verrouillage ou embrayage un couple peut être pris en charge.

2. Transmission selon la revendication 1, **caractérisée en ce que** le porte-satellites (4) via au moins un premier frein (20) ou dispositif de verrouillage ou embrayage peut être relié au carter (9) de manière résistante au couple.

3. Transmission selon la revendication 1 ou 2, **caractérisée en ce que** au moins un premier frein (20) est réalisé sous la forme d'un antidévireur à commutation automatique ou d'un embrayage synchrone.

4. Disposition d'entraînement comportant une machine de travail à entraîner avec une vitesse de rotation réglable de manière variable,
comportant une transmission selon une des revendications 1 à 3,
comportant une première unité d'entraînement (18) couplée au premier train planétaire (3) de la transmission,
comportant une machine de travail (19) couplée au deuxième train planétaire (5) de la transmission, comportant une deuxième unité d'entraînement (10) couplée au support planétaire (4) de la transmission,
dans lequel la première unité d'entraînement (18) et/ou la deuxième unité d'entraînement (10) peuvent être entraînées à une vitesse réglable de manière variable.

5. Procédé de fonctionnement d'un dispositif d'entraînement selon la revendication 4, **caractérisé en ce que** lorsqu'un entraînement du dispositif d'entraînement a lieu exclusivement via la première unité d'entraînement (18), un couple sur le porte-satellites (4) est pris en charge contre le carter d'engrenage (9) via au moins un premier frein (20) ou dispositif de verrouillage ou embrayage.

6. Procédé selon la revendication 5, **caractérisé en ce que** lorsqu'un couple sur le porte-satellites (4) est pris en charge contre le carter d'engrenage (9) via au moins un premier frein (20) ou dispositif de verrouillage ou embrayage, la deuxième unité d'entraînement (10) est commutée sans couple.
